# EUROPEAN PATENT SPECIFICATION

(11) **EP 4 388 936 B1**
(45) Date of publication and mention of the grant of the patent: **01.07.2026**
(21) Application number: 23215310.6
(22) Date of filing: 08.12.2023
(51) Int. Cl.: A47B 57/10, B60P 3/03, A47B 51/00, A47B 53/00, A47B 57/04

(54) **SYSTEM AND METHOD FOR STORING GOODS**
SYSTEM UND VERFAHREN ZUM LAGERN VON WAREN
SYSTÈME ET PROCÉDÉ DE STOCKAGE DE MARCHANDISES

(30) Priority: 22.12.2022 SE 2251556
(43) Date of publication of application: 26.06.2024
(73) Proprietor: Scania CV AB, 151 87 Södertälje (SE)
(72) Inventor: NÉMETHY, Oscar, 418 73 Göteborg (SE)
(74) Representative: Scania CV AB

(56) References cited:
- WO-A1-2024/154010
- JP-A- H10 215 958
- US-A- 5 738 225
- US-A1- 2018 271 281
- US-B1- 10 624 484

## Description

### Field of the invention

The invention relates generally to systems for storing goods. In particular, the present invention relates to a shelving system for storing goods. The invention also relates to a method, a shelf assembly and vehicle comprising a shelving system for use when transporting goods in the vehicle.

### Background of the invention

There exist various kinds of shelving systems, i.e., systems comprising one or more shelves and means being configured to carry the shelf. Furthermore, such shelving systems are utilised in numerous different areas of use, as is known per se, such as in domestic use, warehouse storage, stores, offices and other work space, sheds, etc.

The shelving systems may be of a permanent design, i.e., the shelving system may be designed with the shelves being fixed in a permanent configuration.

The shelving systems may also be of an adjustable design, which allows for a more flexible use of shelves, and to adapt the shelf configuration to particular needs, and also to allow reconfiguration in case the use, or need for storage, changes over time. Adjustable shelving systems hence provide for a system where the vertical positioning of shelves can be varied. These systems may be of various different designs, and e.g. comprise vertical support elements into which supporting brackets or the shelves themselves can be fixed at different heights.

For example, the vertical elements of the shelving system may be drilled or otherwise provided with recesses or openings to allow for supports of, e.g., metal or other suitable material to be inserted, and upon which the shelf is then configured to rest when carrying load. There also exist other solutions where the vertical elements, e.g., comprise grooves into which the shelf can be inserted or protruding supports for carrying the shelf.

Shelving systems of the above kind may be of a design intended to be fixed to a support such as a wall, or, e.g., be of a free-standing design.

There also exist mobile shelving systems, i.e., compact archives, where shelving units are fitted with wheeled traction systems. The shelving units may then be packed next to each other when access to a particular shelving unit is not required, but can be moved to open up an aisle between shelving units to allow access. The elimination of the need for permanent aisles between the shelving units means that less floor space needs to be allocated for the storage. JP H10 215958 A discloses an example of such a mobile shelving system. Other examples of shelving systems can be found in US 2018/271281 A1, US 10 624 484 B1 or US 5 738 225 A.

### Summary of the invention

It is an object of the present invention to provide a shelving system that provides for a high degree of flexibility in the use of the shelving system, and which can also be, automatically adapted to account for changes in the current requirements of the shelving configuration should such changes arise.

According to an aspect of the invention, it is provided a shelving system according to claim 1.

As was discussed above, there exists numerous kinds of shelving systems, where many such systems are static in the sense that the shelves are permanently fixed to designated positions. Although there also exist shelving systems that allow for a degree of flexibility, e.g., by allowing shelves to be removed from one position to be repositioned at a new position, such systems still in general require that loads being carried by the shelves are removed prior to carrying out a reconfiguration of the shelves of the shelving system, and the possibilities of reconfiguration are still limited. According to embodiments of the invention, it is provided a shelving system which allows for a more flexible use of shelves, and which allows the shelf configuration of the shelving system to be adapted to current needs according to a new technology, and which also allow reconfiguration in case the use, or need for storage, changes over time while shelves carrying load may continue to carry the load also when being displaced. According to embodiments of the invention, the shelving system solution allows for a high degree of flexibility and may be configured to automatically adapt to changes in the need for a particular configuration, essentially as the changes in need arise. According to embodiments of the invention, it is also provided for other use of the shelf assemblies of the shelving system in addition to the carrying of load such as goods.

According to the invention, this is accomplished by a shelving system where guide tracks carry a shelf assembly, and where the guide tracks provide for displacement of the shelf assembly along the guide tracks, so that a high degree of flexibility is provided in terms of configuration of the shelving system. The shelf assembly can continue to carry load while being displaced so as to facilitate logistics and use of the shelving system. This also provides for additional possibilities such as reconfiguring of a shelving system while the shelves continue to carry a load. The displacement is provided for by displacement elements being arranged at a shelf edge of the shelf assembly, where the displacement is caused to occur by setting the displacement elements in motion using an actuator. The displacement of a shelf assembly being released from a previous position to a new position for continued use in the new position by being releasably fixed at the new position provides a solution which can be adapted to changing needs. The more the number of shelves and/or guide tracks, the greater the possibilities to adapt the shelving system to changing needs. The positions to which displacement can be carried out may be distinct positions, but according to embodiments of the invention the guide track allow displacement to any position of the portion of the guide track being configured to carry shelves, such as a plurality of shelves.

According to the invention, each of the at least two displacement elements is individually controllable by an actuator, where a single actuator may individually control the two (or more) displacement elements. This may, for example, be achieved through the use of suitable gearing to allow a single actuator to control more than one displacement element, where the displacement elements may be controlled, e.g., one at a time or at different speeds by suitable control of the gearing. The individual controllability allows for a precise control of the movements of the shelf assembly, and also for selecting guide track when guide tracks intersect as will be discussed further below.

According to embodiments of the invention, individual controllability is achieved by one or more of the displacement elements being provided with individual actuators, i.e., a single actuator may be configured to control only a single displacement element, to provide for the individual controllability. That is, each displacement may be configured to be controlled by an individual actuator.

According to embodiments of the invention, the means for releasably fixing the shelf assembly to a position following displacement may consist in the guide track and the displacement elements comprising mutually interacting interconnection means being configured such that, when a motion of the at least two displacement elements is stopped by the at least one actuator, the shelf assembly is automatically locked in position by the mutually interacting interconnection means. For example, the solution may be of a rack-and-pinion type where the displacement element may, e.g., be of a pinion design and mesh with a rack of the guide track so that the solution not only provides for the displacement by rotating the pinion along the rack, but also provides a locking function as the rotation of the pinion is stopped and prevents further displacement. The means for releasably fixing the shelf may e.g. also consist of a high-friction connection between the guide track and displacement element.

According to embodiments of the invention, the shelf assembly and/or the guide track may, instead or in addition, comprise controllable locking means that, when activated, locks the shelf assembly in the current position along the guide track, where individual locking means may be utilized for each position where a displacement element interact with a guide track. Such means may comprise e.g. a linear or rotating actuator such as a locking pin or piston or means being configured to rotate that is controlled to perform a motion in order to lock the shelf assembly in position, e.g. by a generating gripping or compressive force, and which may be released when the shelf assembly is again to be displaced. According to embodiments of the invention the displacement elements hold the shelf assembly in position by being constantly powered by the actuator to counteract any force, such as the force of gravity, that otherwise attempt to displace the shelf assembly.

According to embodiments of the invention, there are a plurality of parallel tracks having an extension along a first direction, where the shelf assembly is configured to be simultaneously carried by at least two of the plurality of parallel guide tracks. The shelving system may be configured to comprise a plurality of shelf assemblies, where different shelf assemblies may be configured to be carried by different pairs of guide tracks.

According to the invention, the shelving system comprises a plurality of parallel guide tracks having an extension along a first direction, such as a vertical direction, and at least one interconnecting guide track interconnecting at least two of the parallel guide tracks, where the one or more shelf assembles are configured to be displaceable along the plurality of parallel tracks and the at least one interconnecting guide track. This provides for a system with a high degree of flexibility since the shelf assemblies may be displaced from one of the plural parallel guide tracks to another, and hence, e.g., be displaced from being carried by a first pair of guide tracks to a second, different, pair of guide tracks. Shelf assemblies of the shelving system may thereby be displaced from one pair of guide tracks to another while still carrying a load. According to embodiments of the invention the shelf assemblies may also be rotated e.g. by being displaced from being carried by two guide tracks to being carried by a single guide track using the interconnecting guide track. This provides for further use of the shelf assemblies than carrying a load.

According to embodiments of the invention, as discussed above, displacement of the shelf assembly along the plurality of parallel guide tracks and/or the at least one interconnecting guide track may be controlled by controlling a motion of the displacement elements, where in particular the motion may be controlled by individually controlling the displacement elements. According to embodiments of the invention, a displacement of the at least one shelf assembly from one of the plurality of parallel tracks to one of the at least one interconnecting tracks, or vice versa, is achieved by individually controlling a speed of displacement of the at least two displacement elements. In this way a precise control may be obtained to ensure that the shelf assemblies are displaced according the intended displacement, e.g. when encountering a crossing of guide tracks having different directions of extension so that the displacement continues along the intended guide track.

In this way a shelf assembly may be displaceable to a plurality of different positions, e.g., the at least two displacement elements being carried by a same guide track, and/or the at least two displacement elements being carried by different guide tracks, and/or the at least two displacement elements are carried by an interconnecting guide track, and/or one of the at least two displacement elements being carried by one of the parallel guide tracks extending along said first direction, and another of the at least two displacement elements is carried by an interconnecting guide track. Hence a plurality of possibilities are provided according to embodiments of the invention.

This, in turn, has as consequence that an inclination of a load carrying surface of the shelf assembly for carrying a load in relation to the plurality of guide tracks extending along the first direction will depend on a current displacement position of the shelf assembly along the plurality of guide tracks. For example, in case the shelf assembly is carried by two parallel guide tracks the load carrying surface of the shelf assembly may be horizontal. In case the shelf assembly is carried by a single guide track the load carrying surface will be parallel to the guide track, and, e.g., be vertical in case the extension of the guide track is vertical. The shelf assembly further have any inclination therebetween, e.g. during displacement from a horizontal position to a vertical position.

According to embodiments of the invention, a direction of displacement of the at least one shelf assembly along the one of the plurality of parallel tracks is controlled by individually controlling the speed of displacement of the at least two displacement elements to so that the displacement elements displace the shelf assembly at different individual speeds so as to ensure that the displacement is effectuated in a desired manner, for example in terms of selecting guide track when a displacement element reaches an intersection of intersecting guide tracks.

According to embodiments of the invention, a computer-implemented control arrangement is utilized for controlling displacement of the at least one shelf assembly by computer-implemented control of the at least one actuator to thereby control motion of the at least two displacement elements. In this way the shelving system may be a computerized shelving system that may automatically reconfigure shelves by individually control displacement of a plurality of shelf assemblies, as the current conditions in terms of, e.g., need for storage changes.

The control arrangement may be configured to keep track of shelf assemblies e.g. through the use of dead-reckoning, e.g. by keeping track of the number of rotations of the actuator to thereby determine the travelled distance, or alternatively or in addition e.g. sensors may be utilized to determine the current positions of shelf assemblies.

According to embodiments of the invention, the shelving system comprises a first set of guide tracks having a first configuration and being arranged in a first plane, and a second set of guide tracks having a second configuration being a mirrored configuration in relation to the first configuration of the first set of guide tracks, where the second set of guide tracks being arranged in a second plane being parallel to and at a distance from the first plane. Furthermore, at least one shelf assembly comprises displacement elements on at least two opposite shelf edges, where the shelf assembly being configured to be carried by at least one guide track of each of the first and second set of guide tracks to provide for the shelf assembly to be simultaneously displaced along at least one guide track of each of the first and second set of guide tracks.

This provides for a solution where the shelf assembly can be carried by at least one guide track of each of the first and second sets of guide tracks to provide for the shelf assembly to be simultaneously carried by guide tracks at opposite ends of the shelf assembly, and be displaced along at least one guide track of each of the first and second set of guide tracks. Hereby an even greater flexibility is obtained, in particular when interconnecting guide tracks are used in the two sets of guide tracks, respectively, and this also allows for a solution where shelf assemblies may be controlled to be aligned edge by edge to form e.g. separating barriers or walls, or even enclosures by forming e.g. horizontal and vertical walls.

Also in this case a control arrangement may be configured to control displacement of the shelf assemblies along the guide tracks to ensure a desired shelving system configuration.

The control arrangement may also configured to control the displacement elements of a shelf assembly such that the displacement elements are synchronously displaced along corresponding guide tracks of the first and second set of guide tracks, e.g. to avoid undesired inclinations of the shelf assembly or the shelf assembly being jammed during the displacement by unsynchronized motion. Furthermore, the control arrangement may comprise load balancing means for controlling the power of individual displacement elements in order to account for, e.g., unevenly loaded shelf assemblies when displacing the shelf assemblies. This may also be utilized to ensure that a single displacement element or actuator is not subjected to unnecessary wear.

The invention also relates to a shelf assembly being configured to be used in a shelving system according to the above, where the shelf assembly comprises a shelf body and at least two displacement elements being arranged at one of, or at opposite ones of, shelf edges of the shelf, and being configured to displace the shelf assembly along at least one guide track of a shelving system according to the above using at least one actuator being configured to effectuate the displacement by controlling a motion of the at least two displacement elements.

According to embodiments of the invention the position of the displacement elements may be attached to the shelf body in such a manner that the position of the displacement element along the edge of the shelf assembly may have a built in adjustability to account for possible differences in inter-guide track distance between guide tracks, and also facilitate e.g. switching of guide track having one direction of extension to a guide track having another direction of extension.

Further advantageous embodiments of the method, the control arrangement, the vehicle, the computer program, and the computer-readable medium according to the present invention and further advantages with the embodiments of the present invention emerge from the detailed description of embodiments.

### Brief description of the drawings

Fig. 1 illustrates a shelving system not according to embodiments of the invention:
Fig. 2A schematically illustrates a shelf assembly not according to embodiments of the
   invention;
Fig. 2B schematically illustrates the connection of a shelf assembly to a guide track;
Figs. 3A-3C illustrates a method of use of a shelving assembly not according to embodiments of the invention;
Fig. 4A-C illustrates a shelving system according to embodiments of the invention;
Fig. 5 illustrates another shelving system according to embodiments of the invention;
Fig. 6 illustrates a shelf assembly of the shelving system of fig. 5;
Fig. 7A-E illustrates examples of reconfigurations of a shelving system according to changing needs for storage;

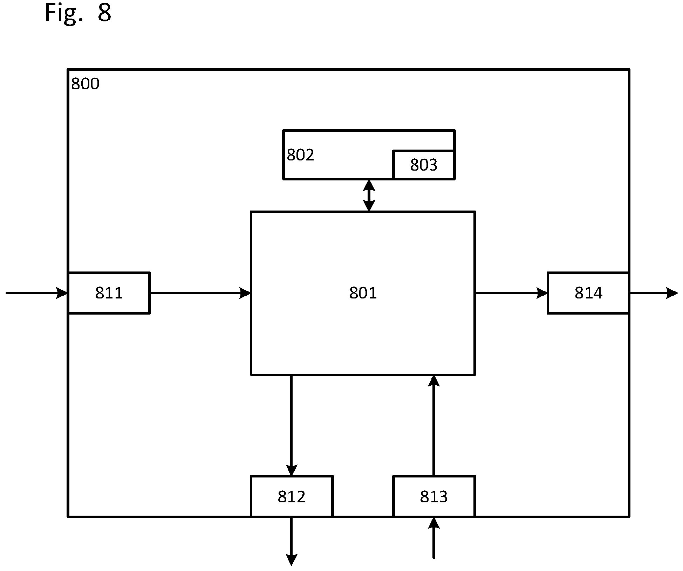

Fig. 8 illustrates a control arrangement, which may be utilized to control shelf assemblies according to embodiments of the invention may be implemented.

### Detailed description of exemplary embodiments

Embodiments of the present invention will be exemplified in the following.

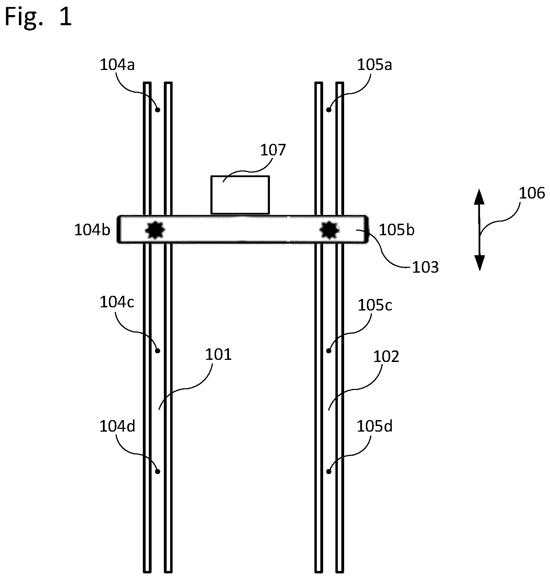

Fig. 1 illustrates a first exemplary embodiment of a shelving system 100 not according to embodiments of the invention. The shelving system of fig. 1 comprises a pair of guide tracks 101, 102. The guide tracks may be configured to, in use, have a general vertical extension, and e.g. be attached to a wall or other support means for supporting a vertical orientation of the guide tracks using any suitable fastening means. The guide tracks 101, 102 are further configured to carry at least one shelf assembly 103, where the shelf assembly 103, in turn, is configured to carry a load 107, such as goods or any other kind of load being suitable to be carried by the shelf assembly when supported by the guide tracks 101, 102. In this general aspect the shelving system is similar to a conventional shelving system comprising vertical support elements being configured to carry a shelf.

However, the guide tracks 101, 102 and the shelf assembly 103 comprise mutually interacting means to provide for the shelf assembly 103 being carried by the guide tracks 101, 102 while providing for a releasably fixed support of the shelf assembly 103 by the guide tracks 101, 102. The releasably fixed support may be realised in various different manners as will be described below.

Furthermore, the guide tracks 101, 102 are configured to provide for a displacement of the shelf assembly 103 along the guide tracks, in the directions indicated by arrows 106, while maintaining, and hence continuing to, support of the shelf assembly 103, so that the displacement of the shelf assembly may be carried while the shelf assembly 103 simultaneously continues to carry the load 107, and hence without the need for relieving the shelf assembly 103 from the load 107 prior to displacement from one position to another along the guide tracks 101, 102. In addition, and as will also be discussed below, the guide tracks 101, 102 are configured such that the shelf assembly 103 can be releasably fixed to a plurality of different positions along the guide tracks 101, 102. Hence the shelf assembly 103 can be displaced from any of the plurality of different positions along the guide tracks 101, 102, to any other of the plurality of different position along the guide tracks 101, 102. The guide tracks 101, 102 may be configured to provide for a plurality of discrete positions, or be configured to allow positioning of the shelf assembly at essentially any desired position along the guide track. Examples of such discrete or continuous positions are schematically illustrated in fig. 1 by 104a-d and 105a-d, respectively, where the shelf assembly currently is positioned at the positions 104b, 105b of the guides tracks 101,102, and where exemplary possible positions of the shelf assembly comprise corresponding pairs of positions of the guide tracks, such as 104a, 105a; 104b, 105b; etc.

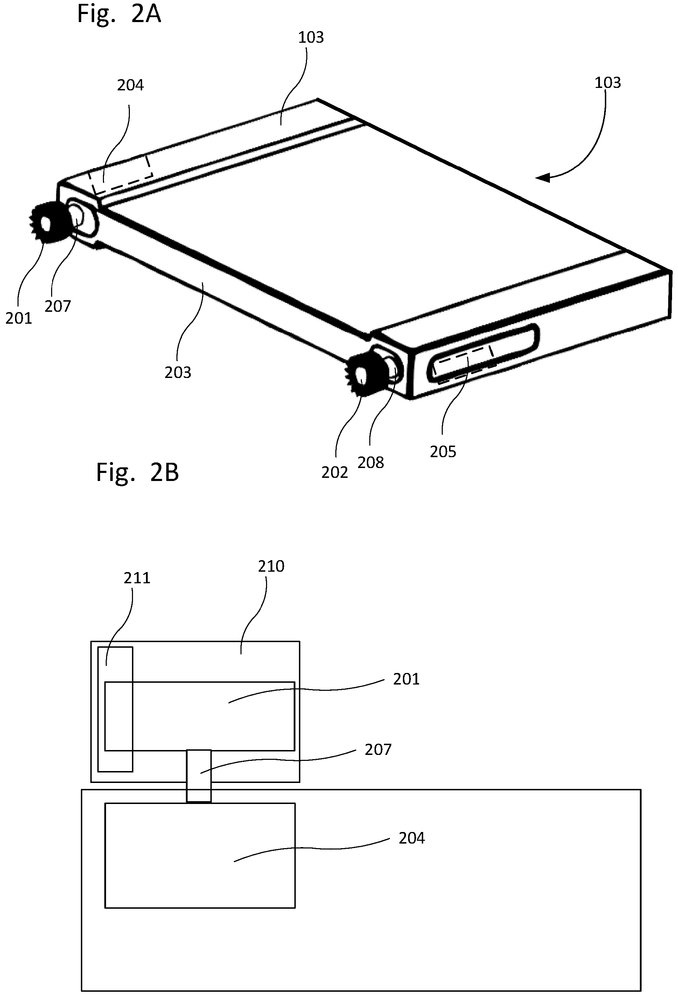

With regard to the displacement of the shelf assembly 103 along the guide tracks 101, 102, the shelf assembly 103 comprises at least one two displacement elements being arranged at one of, as in the present example, or at opposite ones of, shelf edges of the shelf assembly. This is schematically illustrated in fig. 2A by displacement elements 201, 202 attached to an edge 203 of the shelf assembly. These displacement elements 201, 202 may be of various different designs, and form part of the mutually interacting means and hence be adapted to the design of the guide track being used. The displacement elements 201, 202 are configured to displace the shelf assembly along the guide tracks 101, 102 to make possible the displacement of the shelf assembly from one position to another along the guide tracks 101, 102. The displacement elements 201, 202 may be of any suitable design, for as long as displacement of the shelf assembly is provided for. For example, the displacement elements may be of a general pinion design as in the illustrated example, which may be configured to run along a rack, e.g. forming part of, and running along the length being utilised for displacement of, the guide track to thereby translate the rotational motion of the pinion into linear motion of the shelf assembly so as to displace the shelf assembly.

The shelf assembly 103 further comprises at least one actuator, two according to the present example, and which actuators are integrated into the shelf body according to the example and schematically indicated by dashed lines 204, 205. The actuators 204, 205 are configured to effectuate the displacement of the shelf assembly along the at least one guide track by controlling motion of the displacement elements 201, 202 so that the desired displacement thereby is realised. The actuator may, e.g., comprise an electric motor of any suitable kind, such as a stepper motor, to carry out the desired motion through a shaft 207, 208 connection.

The guide track may further comprise e.g. a channel in which the displacement element runs, and which may comprises an elongated opening, such as a slit, towards the shelf assembly, where the elongated opening may have a width being narrower than the diameter of the displacement element to allow the shelf assembly being supported by the guide track while simultaneously allowing displacement, where a shaft of the displacement element may run in the elongated opening. This is schematically illustrated from above in fig. 2B, which illustrates a guide track having a channel 210 with a rack 211 disposed therein and along which the pinion 201 is configured to run, and where the shaft 207 of the pinion fits into the elongated opening to allow displacement of the shelf assembly. The guide track and shelf assembly may be configured such that the shelf assembly is tightly fitted to the guide track in order to thereby be prevented from tipping. The shaft of the pinion may, e.g., also run through a bearing housing configured to run along the elongated opening to thereby increase rigidity of the solution and keep the shelf assembly in a desired position, such as horizontal. Other means for retaining the shelf assembly to the guide tracks may also be used, where various such solutions exist as is known to a person skilled in the art. For example, conventional track roller guides may be utilised.

As is understood, the displacement elements of fig. 2A are merely exemplary, and may be of any other suitable design, and, e.g., be of a design that in combination with corresponding interacting means of the guide track provide sufficient friction to allow for controlled displacement of the shelf assembly along the guide track. Hence the displacement element may e.g. comprise a wheel or similar means being provided with a high-frictional surface that in turn is configured to run along a similarly high-frictional surface provided along the guide track.

The shelving system 100 also comprises means, or devices, for releasably fixing the shelf assembly 103 at the new position, following release from the initial position and displacement along the guide tracks from this initial position, such as following release from any of the positions defined by the track positions 104a, 105a; 104b, 105b; 104c, 105c; and 104d, 105d, and displacement to any other of the positions 104a, 105a; 104b, 105b; 104c, 105c; and 104d, 105d. These means for releasably fixing the shelf assembly to the guide tracks following displacement may be of various different designs. For example, with regard to the rack and pinion embodiment, it may suffice to stop the motion using the actuator, whereafter the shelf assembly being kept in position by the actuator being designed to prevent further motion of the pinion and thereby shelf assembly.

According to a further example, the shelf assembly may be provided with a locking device, which may be activated when the shelf assembly has reached its desired position, and which retains the shelf assembly in position when the desired displacement has been carried out, e.g. by locking the displacement element to the guide track or otherwise locking the shelf assembly to the guide track.

According to embodiments of the invention the guide tracks may, instead or in addition, be provided with one or more locking devices that are configured to be activated when the shelf assembly has reached its desired position. Such locking devices may be of various different designs and, for example, looking means may be provided at each possible position to which the shelf assembly may be displaced. Alternatively, the locking means may be designed such that, when activated, the shelf assembly is locked in position irrespective of the current position of the displacement element along the guide track.

The locking means/device may, for example, comprise any suitable kind of linear or rotating actuator being configured to perform a motion to lock the shelf assembly in position by applying a locking force, and which may be released when the shelf assembly is again to be displaced. According to embodiments of the invention, an electromagnetic locking mechanism is utilized, instead or in addition, where the shelf assemblies (e.g. the displacement elements) may be provided with electromagnets, which may be suitably activated to clamp to armatures arranged along the guide tracks.

With further regard to the displacement elements, each of the at least two displacement elements is individually controllable by an actuator, where according to embodiments of the invention a single actuator may be utilized to individually control each of the displacement elements, e.g. through the use of suitable gearing to allow a single actuator to individually control multiple displacement elements. According to embodiments of the invention, instead, each displacement element is controlled by a dedicated actuator. The displacement of the shelf assembly may be controlled through the use of a control arrangement, such as a control unit forming part of, or constituting, a control system controlling the shelving system by the control arrangement carrying out the control by providing control signals to the actuator.

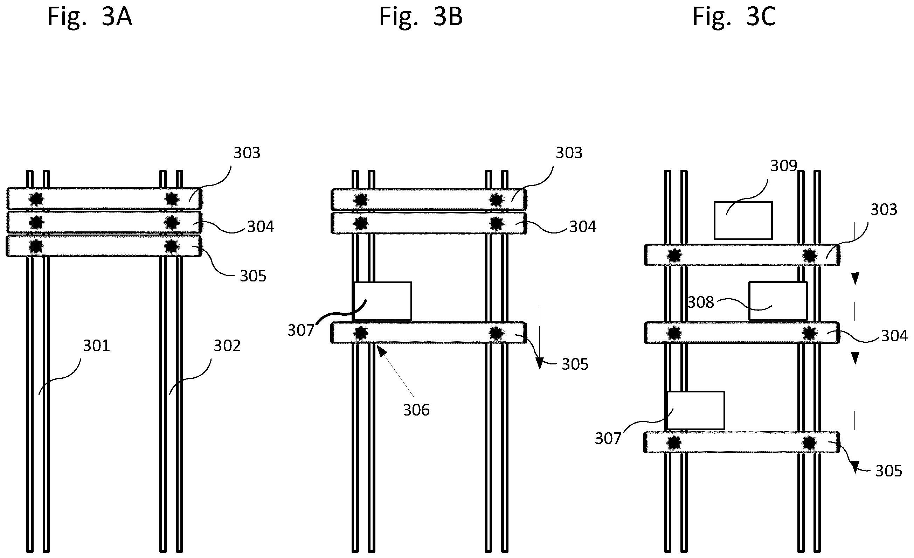

According to the solution of fig. 1, a single shelf assembly 103 is displaceable along a pair of guide tracks. However, any suitable number of shelf assemblies may be arranged to be carried by a pair of guide tracks. This is illustrated by shelving system 300 in figs.3A-C. Fig.3A illustrates a pair of guide tracks 301, 302 and three shelf assemblies 303, 304, 305. According to the situation of fig. 3A, the three shelf assemblies 303-305 are all displaced to an uppermost part of the guide tracks 301, 302. In the figure, thereby, the shelf assemblies 303-305 are in a position where they are not intended to carry a load but rather be stored in a manner that allows for the space beneath the shelf assemblies 303-305 to be used for other purposes, for example, in case there currently is no need for use of the particular shelf assemblies. This, in turn, may facilitate access to other shelving systems or storage of larger objects such as floor standing goods.

However, in case a need for (further) shelf storage arises one or more of the shelf assemblies 303-305 can be displaced to a desired position for subsequent carrying of load. This is illustrated in fig. 3B, where the shelf assembly 305 has been displaced to a position 306 where it is capable of carrying goods, and it has also been provided with goods 307 to be carried. In this situation the shelf assemblies 303 and 304 remain in their uppermost position. However, as the need for storing goods increases, the shelf assembly 305 may be further displaced downwards while still carrying the load 307 during the displacement to make room for displacement of one or more of the remaining shelf assemblies, as is illustrated in fig. 3C where all shelf assemblies 303-305 have been displaced and provided with a load 307-309 to be carried. Consequently, the inter shelf assembly distance may be configured to be adjusted to any suitable distance by selectively controlling displacement elements of the shelf assemblies, respectively.

According to embodiments of the invention, the shelf assemblies may be displaced to any suitable location along the guide tracks, with or without carrying a load and, for example, be displaced to a downmost position or any other suitable position along the guide tracks when not carrying a load, where the particular position may be determined e.g. independence of the current status of the shelving system, and/or the surroundings of the shelving system 300.

The embodiments illustrated so far may prove to be highly useful in various applications. However, according to embodiments of the invention, various further possibilities are made possible through the use of the general inventive idea as defined by the scope of the claims.

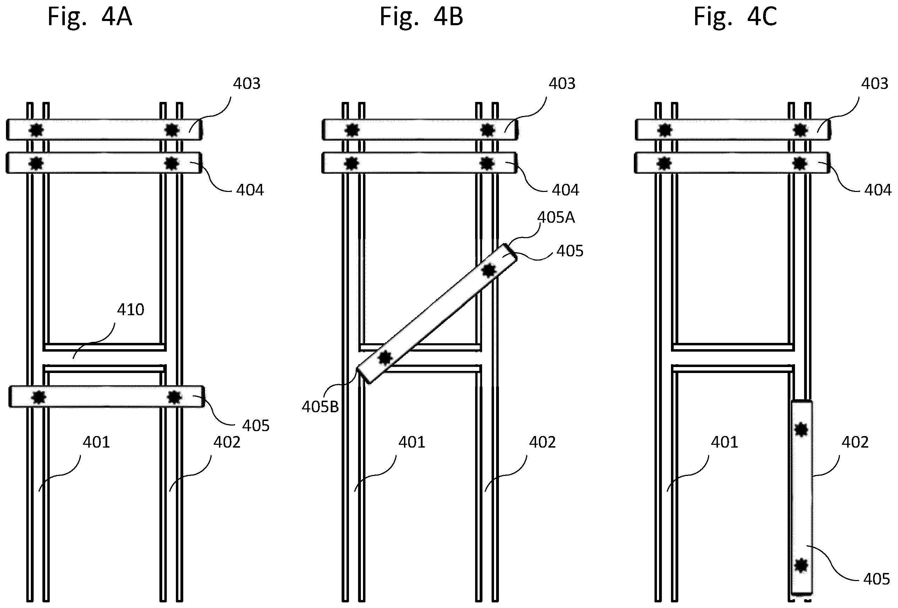

A first schematic example to illustrate this is shown in figs. 4A-C. Fig. 4A illustrates, similar to fig. 1 and fig. 3A, a pair of guide tracks 401, 402. However, in addition to the two parallel, vertical guide tracks as in the previous examples, the shelving system of fig. 4A, in addition, comprises an interconnecting guide track 410 that interconnects the vertical guide tracks 401, 402. The use of one or more interconnecting guide tracks allow for larger flexibility in the displacement of the shelf assemblies. In fig. 4A all shelf assemblies 403-405 are respectively carried by both guide tracks.

In fig. 4B, on the other hand, the shelf assembly 405 has been manoeuvred, through the use of appropriate manoeuvring of the displacement elements using the actuators. The control as to whether the shelf assembly 405, in this case, is to be displaced only up and down along the guide tracks 401, 402 as before, or instead perform an alternate displacement may be controlled by individually controlling the displacement elements, e.g.by utilising different speeds of rotation. For example, when the shelf assembly 405 is to be displaced up and down along the guide tracks 401, 402 this may be accomplished by controlling the displacement elements of the shelf assembly in synchronism, and hence at a same speed of rotation. If, on the other hand, there is a desire to control the shelf assembly to instead move along the interconnecting guide track 410, this may be accomplished by controlling the speed of rotation of the displacement elements differently in relation to each other. For example, one of the displacement elements may be controlled to rotate faster or slower in relation to the other of the displacement elements of the shelf assembly to obtain the desired movement.

In general, when a shelf assembly is to be displaced from an interconnecting track to one of a plurality of parallel tracks, or vice versa, a direction of displacement of the shelf assembly along the tracks is controlled by individually controlling the speed of displacement of the at least two displacement elements to different individual speeds.

As can be seen from fig. 4B, the displacement of the shelf assembly 405 has been controlled using the displacement elements such that the end 405A of the shelf assembly 405 being carried by the guide track 402 carries out an upward motion along the guide track 405, whereas the end 405B, initially being carried by the guide track 405A, instead, has entered the interconnecting guide track 410. This is accomplished by suitably controlling the displacement elements independently from each other in terms of speed of rotation. For example, the displacement element of the end 405A may be controlled to increase its speed of rotation to force the trailing end 405B to enter the interconnecting guide track 410 instead of continuing along the vertical guide track 401. Other possibilities also exist. For example, the trailing end 405B may be allowed to rotate freely to thereby follow the leading end 405A, e.g., by being disconnected from its dedicated actuator (or the actuator controlling both displacement elements when this is the case).

The desired control may, for example, be accomplished through the use of other control of the displacement elements, e.g. by only varying the speed of one of the displacement elements, occasionally stopping one or both of the displacement elements, and/or changing a direction of rotation of the displacement elements to accomplish the desired displacement. According to embodiments of the invention, the desired displacement can be completely controlled through the use of the speed of rotation of the displacement elements. The displacement may be controlled e.g. by a control system which by itself, or upon request from another system, controls the displacement elements through the actuators to carry out the desired displacement. In this way, for example, a shelf assembly may be displaced to be only carried by a single guide track as is the case in fig. 4C where the shelf assembly 405 is now in a vertical position completely carried by guide track 402.

The use of interconnecting guide tracks, consequently, and shelf assemblies according to the invention hence allows that each shelf assembly of the shelving system may essentially be controlled to any desired position.

For example, the shelf assemblies of a shelving system can be displaced to be carried by a same guide track, or different guide tracks, or the displacement elements can be controlled to be carried by an interconnecting guide track, or one of the a least two displacement elements may carried by one of the parallel guide tracks extending along said first direction, and another of the at least two displacement elements is carried by an interconnecting guide track. Further possibilities also exist. It is also to be understood that essentially any number of guide tracks and interconnecting guide tracks may be utilised, and closely located parallel guide tracks, irrespective of the direction of extension, may also utilised to further increase the configuration possibilities.

According to the above embodiments, it has been assumed that the set of guide tracks is to be attached e.g. to a wall or other means, where the shelf assembly attaches to the guide tracks through displacement elements arranged in a single edge of the shelf assembly. According to embodiments of the invention, however, various other configurations are possible and, for example, two parallel sets of guide tracks may be utilized.

In this case, a first set of guide tracks, such as any of the examples above, and hence having a first configuration and being arranged in a first plane, is utilised together with a second set of guide tracks which has the same configuration as the first set, although being mirrored in relation to the first set of guide tracks, and where the second set of guide tracks is arranged in a second plane being parallel to and at a distance from the first plane.

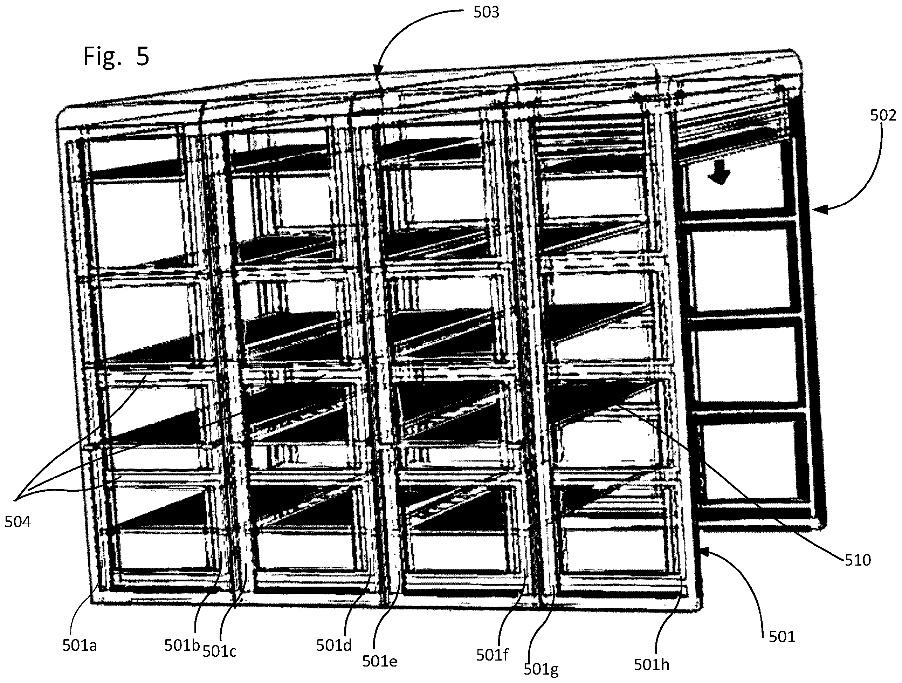

This is exemplified in fig. 5, which illustrates a shelving system comprising a first 501 and a second set 502 of mirrored guide tracks, where each set comprises eight vertical guide tracks, indicated as 501a, 501b, 501c, 501d, 501e, 501f, 501g, 501h, for the first set 501, and where the second set 502 comprises corresponding guide tracks. Each set further comprises a plurality of interconnecting guide tracks, exemplified by 504 in the figure, that interconnect the vertical guide tracks, and allow movement of the various shelf assemblies from vertical guide track to vertical guide track as desired. The illustrated shelving system may be utilized, e.g. in a vehicle or form part of a stationary storage. According to the illustrated example a support structure 503 is utilised to increase rigidity of the system. It is to be noted that closely located parallel guide tracks, e.g. 501b, 501c and 501d, 501e, are utilised to increase the configuration possibilities.

As can be further seen from fig. 5, there are a plurality of shelf assemblies 510 that have been controlled to be displaced to positions where the shelf assemblies may carry goods. As can be further seen from the figure shelf assemblies currently carried by guide tracks 501g, 501h are in the upmost position where the lowermost of these shelf assemblies currently is carrying out a downward motion, e.g. to further increase shelf storage space or for other purposes.

According to the solution of fig. 5, the shelf assemblies may be similar to the shelf assembly illustrated in fig. 2A, however with the difference that the shelf assemblies comprise displacement elements on two opposite shelf edges according to the present example instead of along only one as illustrated above. In this way the shelf assembly can be carried by at least one guide track of each of the first 501 and second 502 sets of guide tracks to provide for the shelf assembly to be simultaneously displaced along at least one guide track of each of the first and second set of guide tracks.

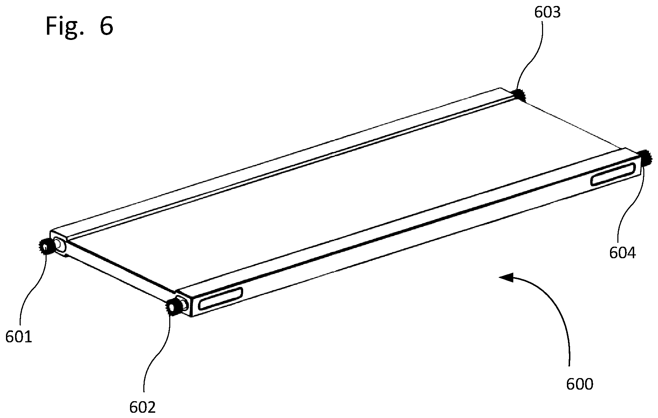

An exemplary shelf assembly 600 of this kind is illustrated in fig. 6, which is similar to the shelf assembly of fig. 2A in terms of displacement elements 601,602, but with the difference that additional displacement elements 603, 604 have been added and possibly also additional actuators for the control of the additional displacement elements 603, 604. As discussed above, an actuator may be configured to control a single displacement element, and hence each displacement element may be independently controlled by a dedicated actuator but it is also possible to control multiple displacement elements using a single actuator. According to the fig. 5 solution, consequently, a shelf assembly concurrently runs along corresponding tracks of both sets of guide tracks 501, 502. That is, displacement elements 601, 602 runs along one or more tracks of the first set of guide tracks 501, and the displacement elements 603, 604 runs along one or more corresponding tracks of the second set of guide tracks 502. Preferably this is carried out in a synchronous manner so that the motion of a shelf assembly in relation to a guide track of the first set of guide tracks is simultaneously mirrored and carried out synchronously for a corresponding guide track of the second set of guide tracks.

The shelving system of fig. 5 may, similar to the above, be controlled by a control arrangement which is configured to control motion of the plurality of shelf assemblies along the guide tracks of the first and second set of guide tracks. The various shelf assemblies may be displaced to essentially any desired location along the sets of guide tracks using the control arrangement. For example, all shelf assemblies may be controlled to be simultaneously carried by the same one or two corresponding guide tracks of the first and second sets of guide tracks. This provides for a high degree of flexibility in terms of organising the shelving system in accordance with current desires, and the shelving system may be adapted to essentially any layout that at present is desirable. For example, shelf assemblies may be displaced to, or from, positions suitable for carrying a load as the need increases or decreases. This also renders the invention suitable for use, e.g., in automated logistics solutions, where, for example, goods may be stored inaccessible, or difficult to access, but where the control system may control displacement of the shelf assemblies such that desired goods may become accessible. This can be utilised, for example, in large warehouse storages, but also e.g. in delivery trucks, where goods need not be sorted in delivery order when loading the truck, but where the shelving system may be controlled to render the next delivery accessible during driving from one drop-off point to another, to thereby facilitate and speed up delivery. With regard to e.g. vehicle transportation using a shelving system according to the invention, the shelf assemblies may also be utilised to partly or fully securing carried load using suitable control of the shelf assemblies. For example, in case a shelf assembly carries load of a homogeneous height, an upper shelf assembly may be utilised to apply slight pressure on the load to maintain it in place, or alternatively the shelf assembly may be displaced upwards towards another shelf assembly to apply a load. Shelf assemblies may also, e.g., be tilted, such as to a vertical position as in fig. 4C, to assist in keeping load in place and prevent load displacement. The shelf assemblies may also be provided with recesses or other suitable means etc. to further be adapted to carry various types of load in a secure manner.

According to embodiments of the invention the shelving system may also be utilised for other purposes. For example, as illustrated in fig. 4C, a shelf assembly may be rotated to e.g. a vertical position. This means that, for example, a number of shelf assemblies may be displaced to an edge-to-edge position e.g. to form a partition wall. Hence the shelving system may be utilised to compartmentalise a storage space, e.g. to separate used goods from new, or for creating different temperature zones, where the sizes of the different compartments may be changed as the need changes. The shelf edges may in such situations be provided with means for establishing e.g. an air-tight connection, and this may also be provided between shelf and guide track when the shelf assembly is parallel to the guide track. In addition, a storage space may e.g. be divided also in e.g. the horizontal direction by arranging horizontal shelf assemblies edge-to-edge. Hence essentially any kind of sealed off spaces would be possible to generate through suitable displacement of the shelf assemblies by displacing shelf assemblies to form partition walls by being displaced to edge-to-edge positions along a guide track.

As is realised by a person skilled in the art, various different possibilities are provided through solutions according to embodiments of the invention. For example, when used in a delivery vehicle, a cooled space may be sealed off from an uncooled space, where the size of the cooled of space may be changed as the delivery proceeds, and e.g. be successively reduced to avoid unnecessary cooling.

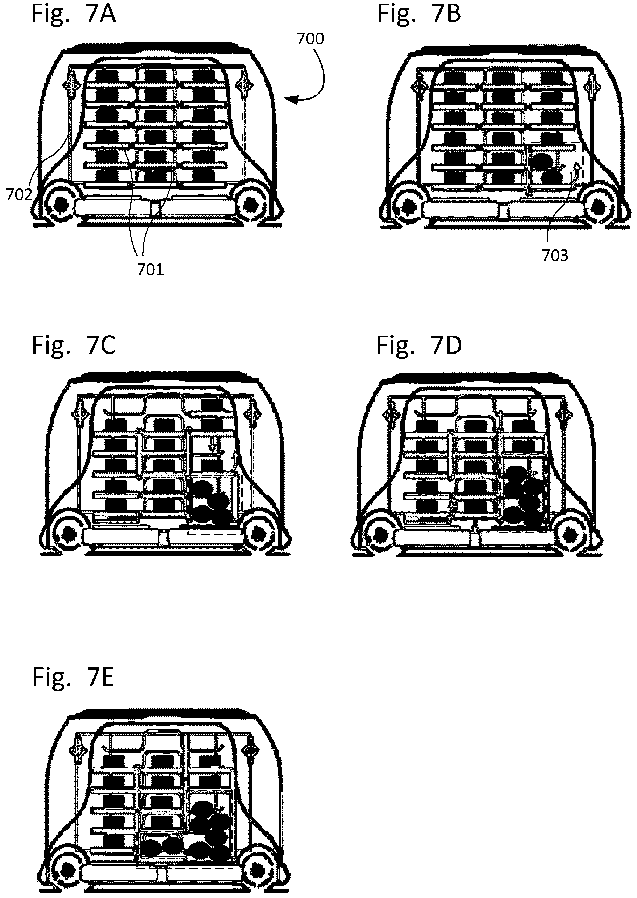

This is illustrated with reference to figs. 7A-E. Fig. 7A illustrates a delivery vehicle 700 comprising a shelving system according to embodiments of the invention, where various shelves have been displaced to various goods-carrying positions, and essentially all the storage space, indicated by box 702, of the vehicle 700 may be utilized for storing goods to be delivered. As delivery commences, shelves will be freed from goods, and space be available for other use by displacing shelves e.g. to a storage position, and/or for sealing off one or more parts of the storage space 702.

This is illustrated in fig. 7B, where the portion 703 of the storage space have been cleared from goods, e.g., following delivery of part of the initial goods carried by the vehicle 700, and where shelves have also been displaced to seal off the space 703. The space 703 may then be used to collect other types of goods as the delivery is under way. For example, a recipient of goods may also have goods to return, but goods may also be collected, e.g., from other sources, e.g. to increase usage of the vehicle and reduce need for other vehicles being used for collecting goods. As delivery and collection of goods goes on, the sealed off storage space may be reconfigured according to the currently prevailing needs, and e.g. increase as more and more goods are delivered and collected, as is illustrated in figs. 7C-E.

The possibility to seal of spaces allows, for example, that the delivered goods and the collected goods may be of different types without unnecessarily mixing the different types of goods. For example, the collected goods may constitute waste.

The illustrated solution may also be used for other purposes. For example, the vehicle may be configured to deliver different types of goods, such as both frozen and non-frozen goods, and hence require different temperature zones, such as a refrigerator zone and a freezer zone. These goods may then be separated in different sealed off storage spaces, where e.g. a freezer zone may controlled to a size fulfilling the current needs so that energy is not unnecessarily spent on cooling unused space. The freezer zone, and/or refrigerator zone, may then be configured to decrease in size as the goods are delivered. Hence, with regard to the sealed off space of fig. 7B-D, the order of the figures could be the other way around, where the sealed off space would then decrease as delivery goes on. The illustrated solution may also be used for various other alternatives and areas of use.

As discussed above, a computer-implemented control arrangement may be utilised to control displacement of shelf assemblies along guide tracks / interconnecting tracks by computer-implemented control of the one or more actuators controlling the at least two displacement elements of a shelf assembly to thereby control motion of the at least two displacement elements. As was also mentioned, the control arrangement may be configured to individually control displacement of a plurality of shelf assemblies, and keep track of current positions of the shelf assemblies to accomplish the desired changes in configuration.

According to an aspect of the invention, a control arrangement 800 for evaluating sensors is illustrated in fig. 7. The control arrangement 800 includes means for providing the actuators with suitable control signals, which may be determined by the control arrangement 800, or be received from any other component communicating with the control arrangement 800.

The control arrangement 800, e.g. a device or a control device according to the invention, may be configured to perform control of shelf assembly motions according to embodiments of the invention.

The control arrangement 800 comprises a computing unit 801, which can be constituted by essentially any suitable type of processor or microcomputer, e.g. a general purpose processor, a circuit for digital signal processing (Digital Signal Processor, DSP), or a circuit having a predetermined specific function (Application Specific Integrated Circuit, ASIC). The computing unit 801 is connected to a memory unit 802 arranged in the control arrangement 800, which memory unit provides the computing unit 801 with, e.g., stored program code and/or stored data that the computing unit 801 requires to be able to perform computations. The computing unit 801 may also be arranged to store partial or final results of computations in the memory unit 802. The control arrangement may comprise a plurality of computing units.

In addition, the control arrangement 800 is provided with devices 811, 812, 813, 814 for receiving and transmitting input and output signals. These input and output signals can contain waveforms, impulses, or other attributes which, by the devices 811, 813 for the reception of input signals, can be detected as information and can be converted into signals which can be processed by the computing unit 801. These signals are then made available to the computing unit 801. The devices 812, 814 for the transmission of output signals are arranged to convert signals received from the computing unit 801 in order to create output signals by, e.g., modulating the signals, which can be transmitted to actuators for carrying out the desired motions, and e.g. to locking mechanisms if used.

Each of the connections to the devices for receiving and transmitting input and output signals can be constituted by one or more of a cable; a data bus, such as a CAN bus (Controller Area Network bus), a MOST bus (Media Orientated Systems Transport bus), or some other bus configuration; or by a wireless connection. A person skilled in the art will appreciate that the above-stated computer can be constituted by the computing unit 801 and that the above- stated memory can be constituted by the memory unit 802. Control units of the illustrated type may be designed and/or configured to perform method steps according to the invention.

The person skilled in the art will appreciate that the herein described embodiments for controlling a shelving system may also be implemented in a computer program, which, when it is executed in a computer, instructs the computer to execute the method. The computer program is usually constituted by a computer program product 803 stored on a non-transitory/non-volatile digital storage medium, in which the computer program is incorporated in the computer-readable medium of the computer program product. The computer-readable medium comprises a suitable memory, such as, e.g.: ROM (Read-Only Memory), PROM (Programmable Read-Only Memory), EPROM (Erasable PROM), Flash memory, EEPROM (Electrically Erasable PROM), a hard disk unit, etc.

The invention is not limited to the above-described embodiments. Instead, the invention relates to, and encompasses all different embodiments being included within the scope of the independent claims.

## Claims

1. A shelving system (100), comprising at least a pair of parallel guide tracks (101, 102), at least one interconnecting guide track interconnecting at least two of the parallel guide tracks and at least one shelf assembly (103) configured to carry a load (107),
the guide tracks (101, 102) and the at least one shelf assembly (103) comprising mutually interacting means to provide for the shelf assembly (103) being carried by the guide tracks (101, 102) while carrying the load (107),
the guide tracks (101, 102) being configured to provide for a displacement of the at least one shelf assembly (103) along the guide tracks (101, 102), while carrying the at least one shelf assembly, and to allow the at least one shelf assembly (103) to be releasably fixed to a plurality of different positions along the guide tracks (101, 102),
the at least one shelf assembly (103) comprising:
at least two displacement elements being arranged at one of, and/or at opposite ones of, shelf edges of the shelf assembly, and being configured to displace the shelf assembly (103) along the guide tracks (101, 102),
and at least one actuator being configured to effectuate the displacement of the shelf assembly (103) along the guide tracks (101, 102) by controlling a motion of the at least two displacement elements,
the shelving system (100) further comprising:
means for, following release from a first position along the guide tracks (101, 102) and displacement to a second position along the guide tracks (101, 102) , releasably fixing the at least one shelf assembly (103) at the second position wherein:
each of the at least two displacement elements is individually controllable by an actuator configured to select a guide track when guide tracks (101, 102) intersect.

2. The shelving system (100) according to claim 1, wherein the means for releasably fixing the shelf assembly (103) to the guide tracks (101, 102) comprises one or more from:
the guide tracks (101, 102) and the at least two displacement elements comprising mutually interacting interconnection means being configured such that, when a motion of the at least two displacement elements is stopped by the at least one actuator, the shelf assembly (103) is automatically locked in position by the mutually interacting interconnection means;
the shelf assembly (103) and/or the guide tracks (101, 102) comprising controllable locking means that, when activated, locks the shelf assembly (103) in a current position along the guide tracks (101, 102).

3. The shelving system (100) according to any one of the claims 1-2, wherein:
the guide tracks (101, 102) comprises a plurality of parallel tracks having an extension along a first direction, and at least one interconnecting track, the at least one interconnecting track interconnecting at least two of the parallel guide tracks (101, 102) extending along the first direction, and
the at least one shelf assembly (103) being configured to be displaceable along the plurality of parallel tracks and the at least one interconnecting track.

4. The shelving system (100) according to claim 3, wherein:
displacement of the at least one shelf assembly (103) along the plurality of parallel guide tracks (101, 102) and/or the at least one interconnecting guide track is controlled by controlling a motion of the displacement elements.

5. The shelving system (100) according to claim 3 or 4, wherein:
the at least one shelf assembly (103) is displaceable to a plurality of different positions, including one or more from:
the at least two displacement elements are carried by a same guide track,
the at least two displacement elements are carried by different guide tracks (101, 102),
the at least two displacement elements are carried by an interconnecting guide track,
one of the a least two displacement elements is carried by one of the parallel guide tracks (101, 102) extending along said first direction, and another of the at least two displacement elements is carried by an interconnecting guide track.

6. The shelving system (100) according to any one of the claims 4-5, wherein a displacement of the at least one shelf assembly (103) from one of the plurality of parallel tracks to one of the at least one interconnecting tracks, or vice versa, is achieved by individually controlling a speed of displacement of the at least two displacement elements.

7. The shelving system (100) according to claim 6, wherein:
when the at least one shelf assembly (103) is to be displaced from an interconnecting track to one of the plurality of parallel tracks, a direction of displacement of the at least one shelf assembly (103) along the one of the plurality of parallel tracks is controlled by individually controlling the speed of displacement of the at least two displacement elements such that the at least two displacement elements carry out displacement at different individual speeds.

8. The shelving system (100) according to any one of the claims 1-7, further comprising:
a computer-implemented control arrangement for controlling displacement of the at least one shelf assembly (103) by computer-implemented control of the at least one actuator to thereby control motion of the at least two displacement elements.

9. The shelving system (100) according to claim 8, wherein:
the control arrangement is configured to individually control displacement of a plurality of shelf assemblies along the guide tracks (101, 102).

10. The shelving system (100) according to any one of the claims 1-9, comprising:
a first set of guide tracks (101, 102) having a first configuration and being arranged in a first plane,
a second set of guide tracks (101, 102) having a second configuration being a mirrored configuration in relation to the first configuration of the first set of guide tracks (101, 102), the second set of guide tracks (101, 102) being arranged in a second plane being parallel to and at a distance from the first plane, and
at least one shelf assembly (103) comprising displacement elements on at least two opposite shelf edges, the shelf assembly (103) being configured to be carried by at least a pair of guide tracks (101, 102) of each of the first and second set of guide tracks (101, 102) to provide for the shelf assembly (103) to be simultaneously displaced along the guide tracks (101, 102) of each of the first and second set of guide tracks (101, 102).

11. The shelving system (100) according to claim 10, further comprising:
a control arrangement configured to control displacement of the at least one shelf assembly (103) along the guide tracks (101, 102) of the first and second set of guide tracks (101, 102), wherein the control arrangement is configured to control the displacement elements of the at least one shelf assembly (103) such that the displacement elements are synchronously displaced along corresponding guide tracks (101, 102) of the first and second set of guide tracks (101, 102).

12. A vehicle comprising a shelving system (100) according to any one of the claims 1-11.

13. A shelf assembly (103) being configured to be used in a shelving system (100) according to any one of the claims 1-11, comprising:
a shelf,
at least two displacement elements being arranged at one of, or at opposite ones of, shelf edges of the shelf, and being configured to displace the shelf assembly (103) along at least a pair of guide tracks (101, 102) of a shelving system (100) according to any one of the claims 1-11, and
at least one actuator being configured to effectuate the displacement of the shelf assembly (103) along at least one guide track of a shelving system (100) according to any one of the claims 1-11 by controlling a motion of the at least two displacement elements.

14. A method performed by a control arrangement for displacing a shelf assembly (103) of a shelving system (100) comprising at least a pair of parallel guide tracks (101, 102), at least one interconnecting guide track interconnecting at least two of the parallel guide tracks and at least one shelf assembly (103) configured to carry a load (107),
the guide tracks (101, 102) and the at least one shelf assembly (103) comprising mutually interacting means to provide for the shelf assembly (103) being carried by the guide tracks (101, 102) while carrying the load (107),
the guide tracks (101, 102) being configured to provide for a displacement of the at least one shelf assembly (103) along the guide tracks (101, 102), while carrying the at least one shelf assembly, and to allow the at least one shelf assembly (103) to be releasably fixed to a plurality of different positions along the guide tracks (101, 102),
the method comprising:
providing control signals to at least one actuator of the shelf assembly, the actuator being configured to effectuate a displacement of the shelf assembly (103) along the guide tracks (101, 102) based on the control signals by controlling a motion of at least two displacement elements being arranged at one of, or at opposite ones of, shelf edges of the shelf assembly, and being configured to displace the shelf assembly (103) along the guide tracks (101, 102),
the method further comprises releasably fixing the at least one shelf assembly (103) to a second position following release from a first position along the guide tracks (101, 102) and displacement to the second position along the guide tracks (101, 102), the actuator being further configured to select a guide track when guide tracks (101, 102) intersect.

15. A computer program comprising instructions which, when the program is executed by a computer, cause the computer to carry out the method according to claim 14.

16. A computer-readable medium comprising instructions which, when executed by a computer, cause the computer to carry out the method according to claim 14.

## Patentansprüche

1. Regalsystem (100), das wenigstens ein Paar paralleler Führungsschienen (101, 102), wenigstens eine Verbindungsführungsschiene, die wenigstens zwei der parallelen Führungsschienen verbindet, und wenigstens eine Regalanordnung (103), die zum Tragen einer Last (107) eingerichtet ist, umfasst,
wobei die Führungsschienen (101, 102) und die wenigstens eine Regalanordnung (103) miteinander interagierende Einrichtungen umfassen, die dafür sorgen, dass die Regalanordnung (103), während sie die Last (107) trägt, von den Führungsschienen (101, 102) getragen wird,
wobei die Führungsschienen (101, 102) dazu eingerichtet sind, für eine Verschiebung der wenigstens einen Regalanordnung (103) entlang der Führungsschienen (101, 102) zu sorgen, während sie die wenigstens eine Regalanordnung tragen, und zu ermöglichen, dass die wenigstens eine Regalanordnung (103) an vielen verschiedenen Positionen entlang der Führungsschienen (101, 102) lösbar fixiert werden kann,
wobei die wenigstens eine Regalanordnung (103) umfasst:
wenigstens zwei Verschiebeelemente, die auf einem und/oder auf gegenüberliegenden Regalrändern der Regalanordnung angeordnet und dazu eingerichtet sind, die Regalanordnung (103) entlang der Führungsschienen (101, 102) zu verschieben,
und wenigstens einen Aktuator, der dazu eingerichtet ist, die Verschiebung der Regalanordnung (103) entlang der Führungsschienen (101, 102) durch Steuern einer Bewegung der wenigstens zwei Verschiebeelemente herbeizuführen,
wobei das Regalsystem (100) ferner umfasst:
eine Einrichtung zum lösbaren Fixieren der wenigstens einen Regalanordnung (103) in der zweiten Position, nachdem sie aus der ersten Position entlang der Führungsschienen (101, 102) gelöst und in eine zweite Position entlang der Führungsschienen (101, 102) verschoben wurde, wobei:
jedes der wenigstens zwei Verschiebeelemente einzeln von einem Aktuator steuerbar ist, der dazu eingerichtet ist, eine Führungsschiene auszuwählen, wenn sich Führungsschienen (101, 102) kreuzen.

2. Regalsystem (100) nach Anspruch 1, wobei die Einrichtung zum lösbaren Fixieren der Regalanordnung (103) an den Führungsschienen (101, 102) eine oder mehrere der folgenden Elemente umfasst:
die Führungsschienen (101, 102) und die wenigstens zwei Verschiebeelemente mit miteinander agierenden Verbindungseinrichtungen, die derart eingerichtet sind, dass die Regalanordnung (103) automatisch durch die miteinander agierenden Verbindungseinrichtungen in ihrer Position arretiert wird, wenn eine Bewegung der wenigstens zwei Verschiebeelemente von dem wenigstens einen Aktuator gestoppt wird;
die Regalanordnung (103) und/oder die Führungsschienen (101, 102) mit steuerbaren Arretiereinrichtungen, die bei Aktivierung die Regalanordnung (103) in einer aktuellen Position entlang der Führungsschienen (101, 102) arretieren.

3. Regalsystem (100) nach einem der Ansprüche 1-2, wobei:
die Führungsschienen (101, 102) eine Mehrzahl paralleler Schienen mit einer Erstreckung entlang einer ersten Richtung und wenigstens eine Verbindungsschiene umfassen, wobei die wenigstens eine Verbindungsschiene wenigstens zwei der sich entlang der ersten Richtung erstreckenden parallelen Führungsschienen (101, 102) verbindet, und
die wenigstens eine Regalanordnung (103) derart eingerichtet ist, dass sie entlang der Mehrzahl paralleler Schienen und der wenigstens einen Verbindungsschiene verschiebbar ist.

4. Regalsystem (100) nach Anspruch 3, wobei:
eine Verschiebung der wenigstens einen Regalanordnung (103) entlang der Mehrzahl paralleler Führungsschienen (101, 102) und/oder der wenigstens einen Verbindungsführungsschiene durch Steuern einer Bewegung der Verschiebeelemente gesteuert wird.

5. Regalsystem (100) nach Anspruch 3 oder 4, wobei:
die wenigstens eine Regalanordnung (103) in viele verschiedene Positionen verschiebbar ist, umfassend eine oder mehrere von:
die wenigstens zwei Verschiebeelemente werden von derselben Führungsschiene getragen,
die wenigstens zwei Verschiebeelemente werden von unterschiedlichen Führungsschienen (101, 102) getragen,
die wenigstens zwei Verschiebeelemente werden von einer Verbindungsführungsschiene getragen,
eines der wenigstens zwei Verschiebeelemente wird von einer der sich entlang der ersten Richtung erstreckenden parallelen Führungsschienen (101, 102) getragen und das andere der wenigstens zwei Verschiebeelemente wird von einer Verbindungsführungsschiene getragen.

6. Regalsystem (100) nach einem der Ansprüche 4-5, wobei eine Verschiebung der wenigstens einen Regalanordnung (103) von einer der Mehrzahl paralleler Schienen auf eine der wenigstens einen Verbindungsschiene oder umgekehrt erreicht wird, indem eine Verschiebungsgeschwindigkeit der wenigstens zwei Verschiebeelemente individuell gesteuert wird.

7. Regalsystem (100) nach Anspruch 6, wobei:
eine Verschiebungsrichtung der wenigstens einen Regalanordnung (103) entlang einer der Mehrzahl paralleler Schienen gesteuert wird, indem die Verschiebungsgeschwindigkeit der wenigstens zwei Verschiebeelemente derart individuell gesteuert wird, dass die wenigstens zwei Verschiebeelemente die Verschiebung mit unterschiedlichen individuellen Geschwindigkeiten ausführen, wenn die wenigstens eine Regalanordnung (103) von einer Verbindungsschiene auf eine der Mehrzahl paralleler Schienen verschoben werden soll.

8. Regalsystem (100) nach einem der Ansprüche 1-7, das ferner umfasst:
eine computerimplementierte Steueranordnung zum Steuern einer Verschiebung der wenigstens einen Regalanordnung (103) durch computerimplementiertes Steuern des wenigstens einen Aktuators, um dadurch eine Bewegung der wenigstens zwei Verschiebeelemente zu steuern.

9. Regalsystem (100) nach Anspruch 8, wobei:
die Steueranordnung dazu eingerichtet ist, eine Verschiebung einer Mehrzahl von Regalanordnungen entlang der Führungsschienen (101, 102) individuell zu steuern.

10. Regalsystem (100) nach einem der Ansprüche 1-9, das umfasst:
einen ersten Satz Führungsschienen (101, 102), die eine erste Konfiguration aufweisen und in einer ersten Ebene angeordnet sind,
einen zweiten Satz Führungsschienen (101, 102) mit einer zweiten Konfiguration, die eine gespiegelte Konfiguration der ersten Konfiguration des ersten Satzes Führungsschienen (101, 102) darstellt, wobei der zweite Satz Führungsschienen (101, 102) in einer zweiten Ebene angeordnet ist, die zu der ersten Ebene parallel verläuft und von dieser beabstandet ist, und
wenigstens eine Regalanordnung (103), die Verschiebeelemente auf wenigstens zwei gegenüberliegenden Regalrändern umfasst, wobei die Regalanordnung (103) dazu eingerichtet ist, von wenigstens einem Paar Führungsschienen (101, 102) eines jeden des ersten und zweiten Satzes Führungsschienen (101, 102) getragen zu werden, damit die Regalanordnung (103) gleichzeitig entlang der Führungsschienen (101, 102) eines jeden des ersten und zweiten Satzes Führungsschienen (101, 102) verschoben wird.

11. Regalsystem (100) nach Anspruch 10, das ferner umfasst:
eine Steueranordnung, die zum Steuern einer Verschiebung der wenigstens einen Regalanordnung (103) entlang der Führungsschienen (101, 102) des ersten und zweiten Satzes Führungsschienen (101, 102) eingerichtet ist, wobei die Steueranordnung dazu eingerichtet ist, die Verschiebeelemente der wenigstens einen Regalanordnung (103) derart zu steuern, dass die Verschiebeelemente synchron entlang entsprechender Führungsschienen (101, 102) des ersten und zweiten Satzes Führungsschienen (101, 102) verschoben werden.

12. Fahrzeug mit einem Regalsystem (100) nach einem der Ansprüche 1-11.

13. Regalanordnung (103), die zur Verwendung in einem Regalsystem (100) nach einem der Ansprüche 1-11 eingerichtet ist und umfasst:
ein Regal,
wenigstens zwei Verschiebeelemente, die auf einem oder auf gegenüberliegenden Regalrändern des Regals angeordnet und dazu eingerichtet sind, die Regalanordnung (103) entlang wenigstens eines Paares Führungsschienen (101, 102) eines Regalsystems (100) nach einem der Ansprüche 1-11 zu verschieben, und
wenigstens einen Aktuator, der dazu eingerichtet ist, die Verschiebung der Regalanordnung (103) entlang wenigstens einer Führungsschiene eines Regalsystems (100) nach einem der Ansprüche 1-11 durch Steuern einer Bewegung der wenigstens zwei Verschiebeelemente herbeizuführen.

14. Verfahren, das von einer Steueranordnung zum Verschieben einer Regalanordnung (103) eines Regalsystems (100) ausgeführt wird, das wenigstens ein Paar paralleler Führungsschienen (101, 102), wenigstens eine Verbindungsführungsschiene, die wenigstens zwei der parallelen Führungsschienen verbindet, und wenigstens eine Regalanordnung (103), die zum Tragen einer Last (107) eingerichtet ist, umfasst,
wobei die Führungsschienen (101, 102) und die wenigstens eine Regalanordnung (103) miteinander interagierende Einrichtungen umfassen, die dafür sorgen, dass die Regalanordnung (103), während sie die Last (107) trägt, von den Führungsschienen (101, 102) getragen wird,
wobei die Führungsschienen (101, 102) dazu eingerichtet sind, für eine Verschiebung der wenigstens einen Regalanordnung (103) entlang der Führungsschienen (101, 102) zu sorgen, während sie die wenigstens eine Regalanordnung tragen, und zu ermöglichen, dass die wenigstens eine Regalanordnung (103) an vielen verschiedenen Positionen entlang der Führungsschienen (101, 102) lösbar fixiert werden kann,
wobei das Verfahren umfasst:
Bereitstellen von Steuersignalen an wenigstens einen Aktuator der Regalanordnung, wobei der Aktuator dazu eingerichtet ist, eine Verschiebung der Regalanordnung (103) entlang der Führungsschienen (101, 102) basierend auf den Steuersignalen durch Steuern einer Bewegung wenigstens zweier Verschiebeelemente herbeizuführen, die auf einem oder auf gegenüberliegenden Regalrändern der Regalanordnung angeordnet und dazu eingerichtet sind, die Regalanordnung (103) entlang der Führungsschienen (101, 102) zu verschieben,
wobei das Verfahren ferner ein lösbares Fixieren der wenigstens einen Regalanordnung (103) in einer zweiten Position umfasst, nachdem sie aus einer ersten Position entlang der Führungsschienen (101, 102) gelöst und in die zweite Position entlang der Führungsschienen (101, 102) verschoben wurde, wobei der Aktuator ferner dazu eingerichtet ist, eine Führungsschiene auszuwählen, wenn sich Führungsschienen (101, 102) kreuzen.

15. Computerprogramm mit Befehlen, die, wenn das Programm von einem Computer ausgeführt wird, den Computer dazu veranlassen, das Verfahren nach Anspruch 14 auszuführen.

16. Computerlesbares Medium mit Befehlen, die, wenn sie von einem Computer ausgeführt werden, den Computer dazu veranlassen, das Verfahren nach Anspruch 14 auszuführen.

## Revendications

1. Système de rayonnage (100), comprenant l'au moins une paire de rails de guidage parallèles (101, 102), l'au moins un rail de guidage d'interconnexion interconnectant les au moins deux des rails de guidage parallèles et l'au moins un ensemble d'étagère (103) configuré pour porter une charge (107),
les rails de guidage (101, 102) et l'au moins un ensemble d'étagère (103) comprenant des moyens d'interaction mutuelle permettant que l'ensemble d'étagère (103) soit porté par les rails de guidage (101, 102) tout en portant la charge (107),
les rails de guidage (101, 102) étant configurés pour permettre un déplacement dudit au moins un ensemble d'étagère (103) le long des rails de guidage (101, 102), tout en portant l'au moins un ensemble d'étagère, et pour permettre à l'au moins un ensemble d'étagère (103) d'être fixé de manière amovible à une pluralité de positions différentes le long des rails de guidage (101, 102),
l'au moins un ensemble d'étagère (103) comprenant :
les au moins deux éléments de déplacement étant agencés à l'un des bords de l'étagère de l'ensemble d'étagère, et/ou à des bords opposés, et étant configurés pour déplacer l'ensemble d'étagère (103) le long des rails de guidage (101, 102),
et l'au moins un actionneur étant configuré pour effectuer le déplacement de l'ensemble d'étagère (103) le long des rails de guidage (101, 102) en commandant un mouvement des au moins deux éléments de déplacement,
le système de rayonnage (100) comprenant en outre :
des moyens pour, suite à la libération d'une première position le long des rails de guidage (101, 102) et au déplacement vers une deuxième position le long des rails de guidage (101, 102), fixer de manière amovible l'au moins un ensemble d'étagère (103) à la deuxième position, dans lequel :
chacun des au moins deux éléments de déplacement peut être commandé individuellement par un actionneur configuré pour sélectionner un rail de guidage lorsque les rails de guidage (101, 102) se coupent.

2. Système de rayonnage (100) selon la revendication 1, dans lequel les moyens pour fixer de manière amovible l'ensemble d'étagère (103) aux rails de guidage (101, 102) comprennent un ou plusieurs parmi :
les rails de guidage (101, 102) et les au moins deux éléments de déplacement comprenant des moyens d'interconnexion interagissant mutuellement, lesdits moyens étant configurés de telle sorte que, lorsqu'un mouvement des au moins deux éléments de déplacement est arrêté par l'au moins un actionneur, l'ensemble d'étagère (103) est automatiquement verrouillé en position par les moyens d'interconnexion interagissant mutuellement ;
l'ensemble d'étagère (103) et/ou les rails de guidage (101, 102) comprenant des moyens de verrouillage contrôlables qui, lorsqu'ils sont activés, verrouillent l'ensemble d'étagère (103) dans une position actuelle le long des rails de guidage (101, 102).

3. Système de rayonnage (100) selon l'une quelconque des revendications 1 à 2, dans lequel :
les rails de guidage (101, 102) comprennent une pluralité de rails parallèles ayant une extension le long d'une première direction, et l'au moins un rail d'interconnexion, ledit au moins un rail d'interconnexion interconnectant les au moins deux des rails de guidage parallèles (101, 102) s'étendant le long de la première direction, et
l'au moins un ensemble d'étagère (103) étant configuré pour être déplaçable le long de la pluralité de rails parallèles et de l'au moins un rail d'interconnexion.

4. Système de rayonnage (100) selon la revendication 3, dans lequel :
le déplacement de l'au moins un ensemble d'étagère (103) le long de la pluralité de rails de guidage parallèles (101, 102) et/ou de l'au moins un rail de guidage d'interconnexion est commandé en commandant un mouvement des éléments de déplacement.

5. Système de rayonnage (100) selon la revendication 3 ou 4, dans lequel :
l'au moins un ensemble d'étagère (103) est déplaçable vers une pluralité de positions différentes, comprenant une ou plusieurs parmi :
les au moins deux éléments de déplacement sont portés par un même rail de guidage,
les au moins deux éléments de déplacement sont portés par des rails de guidage différents (101, 102),
les au moins deux éléments de déplacement sont portés par un rail de guidage d'interconnexion,
l'un des au moins deux éléments de déplacement est porté par l'un des rails de guidage parallèles (101, 102) s'étendant le long de ladite première direction, et un autre des au moins deux éléments de déplacement est porté par un rail de guidage d'interconnexion.

6. Système de rayonnage (100) selon l'une quelconque des revendications 4 à 5, dans lequel un déplacement de l'au moins un ensemble d'étagère (103) depuis l'une de la pluralité de rails parallèles vers l'un de l'au moins un rail d'interconnexion, ou vice versa, est obtenu en commandant individuellement une vitesse de déplacement des au moins deux éléments de déplacement.

7. Système de rayonnage (100) selon la revendication 6, dans lequel :
lorsque l'au moins un ensemble d'étagère (103) doit être déplacé d'un rail d'interconnexion à l'un de la pluralité de rails parallèles, une direction de déplacement de l'au moins un ensemble d'étagère (103) le long dudit rail parmi la pluralité de rails parallèles est commandée en commandant individuellement la vitesse de déplacement des au moins deux éléments de déplacement de sorte que les au moins deux éléments de déplacement effectuent un déplacement à des vitesses individuelles différentes.

8. Le système de rayonnage (100) selon l'une quelconque des revendications 1 à 7, comprenant en outre :
un agencement de commande implémenté par ordinateur pour commander le déplacement de l'au moins un ensemble d'étagère (103) par commande mise en œuvre par ordinateur de l'au moins un actionneur pour commander ainsi le mouvement des au moins deux éléments de déplacement.

9. Système de rayonnage (100) selon la revendication 8, dans lequel :
l'agencement de commande est configuré pour commander individuellement le déplacement d'une pluralité d'ensembles d'étagères le long des rails de guidage (101, 102).

10. Système de rayonnage (100) selon l'une quelconque des revendications 1 à 9, comprenant :
un premier ensemble de rails de guidage (101, 102) ayant une première configuration et étant agencés dans un premier plan,
un deuxième ensemble de rails de guidage (101, 102) ayant une deuxième configuration étant une configuration miroir par rapport à la première configuration du premier ensemble de rails de guidage (101, 102), le deuxième ensemble de rails de guidage (101, 102) étant agencé dans un deuxième plan parallèle au premier plan et à une certaine distance de celui-ci, et
au moins un ensemble d'étagère (103) comprenant des éléments de déplacement sur les au moins deux bords d'étagère opposés, l'ensemble d'étagère (103) étant configuré pour être porté par l'au moins une paire de rails de guidage (101, 102) de chacun des premier et deuxième ensembles de rails de guidage (101, 102) pour permettre à l'ensemble d'étagère (103) d'être déplacé simultanément le long des rails de guidage (101, 102) de chacun des premier et deuxième ensembles de rails de guidage (101, 102).

11. Système de rayonnage (100) selon la revendication 10, comprenant en outre :
un agencement de commande configuré pour commander le déplacement de l'au moins un ensemble d'étagère (103) le long des rails de guidage (101, 102) du premier et du deuxième ensemble de rails de guidage (101, 102), dans lequel l'agencement de commande est configuré pour commander les éléments de déplacement de l'au moins un ensemble d'étagère (103) de telle sorte que les éléments de déplacement sont déplacés de manière synchrone le long des rails de guidage correspondants (101, 102) du premier et du deuxième ensemble de rails de guidage (101, 102).

12. Véhicule comprenant un système de rayonnage (100) selon l'une quelconque des revendications 1 à 11.

13. Ensemble d'étagère (103) configuré pour être utilisé dans un système de rayonnage (100) selon l'une quelconque des revendications 1 à 11, comprenant :
une étagère,
les au moins deux éléments de déplacement étant agencés au niveau de l'un, ou au niveau de ceux opposés, des bords d'étagère de l'étagère, et étant configurés pour déplacer l'ensemble d'étagère (103) le long de l'au moins une paire de rails de guidage (101, 102) d'un système de rayonnage (100) selon l'une quelconque des revendications 1 à 11, et
l'au moins un actionneur étant configuré pour effectuer le déplacement de l'ensemble d'étagère (103) le long d'au moins un rail de guidage d'un système de rayonnage (100) selon l'une quelconque des revendications 1 à 11 en commandant un mouvement des au moins deux éléments de déplacement.

14. Procédé mis en oeuvre par un dispositif de commande permettant de déplacer un ensemble étagère (103) d'un système de rayonnage (100) comprenant l'au moins une paire de rails de guidage parallèles (101, 102), l'au moins un rail de guidage d'interconnexion interconnectant les au moins deux des rails de guidage parallèles et l'au moins un ensemble étagère (103) configuré pour porter une charge (107),
les rails de guidage (101, 102) et l'au moins un ensemble d'étagère (103) comprenant des moyens d'interaction mutuelle pour assurer que l'ensemble d'étagère (103) est porté par les rails de guidage (101, 102) tout en portant la charge (107),
les rails de guidage (101, 102) étant configurés pour assurer un déplacement de l'au moins un ensemble d'étagère (103) le long des rails de guidage (101, 102), tout en portant l'au moins un ensemble d'étagère, et pour permettre à l'au moins un ensemble d'étagère (103) d'être fixé de manière amovible à une pluralité de positions différentes le long des rails de guidage (101, 102),
le procédé comprenant :
la fourniture de signaux de commande à l'au moins un actionneur de l'ensemble d'étagère, l'actionneur étant configuré pour effectuer un déplacement de l'ensemble d'étagère (103) le long des rails de guidage (101, 102) sur la base des signaux de commande en commandant un mouvement des au moins deux éléments de déplacement agencés au niveau de l'un, ou au niveau de ceux opposés, des bords d'étagère de l'ensemble d'étagère, et étant configuré pour déplacer l'ensemble d'étagère (103) le long des rails de guidage (101, 102),
le procédé comprend en outre la fixation de manière amovible de l'au moins un ensemble d'étagère (103) dans une deuxième position après la libération d'une première position le long des rails de guidage (101, 102) et le déplacement vers la deuxième position le long des rails de guidage (101, 102), l'actionneur étant en outre configuré pour sélectionner un rail de guidage lorsque les rails de guidage (101, 102) se coupent.

15. Programme d'ordinateur comprenant des instructions qui, lorsque le programme est exécuté par un ordinateur, amènent l'ordinateur à effectuer le procédé selon la revendication 14.

16. Support lisible par ordinateur comprenant des instructions qui, lorsqu'elles sont exécutées par un ordinateur, amènent l'ordinateur à mettre en œuvre le procédé selon la revendication 14.
